(19)

Europäisches
Patentamt
European
Patent Office
Office européen
des brevets

(11) **EP 4 471 947 A1**

(12) **EUROPEAN PATENT APPLICATION**
published in accordance with Art. 153(4) EPC

(43) Date of publication:
04.12.2024 Bulletin 2024/49

(21) Application number: 22922627.9

(22) Date of filing: 25.01.2022

(51) International Patent Classification (IPC):
*H01M 50/172* $^{(2021.01)}$    *H01M 50/533* $^{(2021.01)}$
*H01M 50/552* $^{(2021.01)}$    *H01M 50/547* $^{(2021.01)}$
*H01M 10/0525* $^{(2010.01)}$

(52) Cooperative Patent Classification (CPC):
**H01M 10/0525; H01M 50/172; H01M 50/533;
H01M 50/547; H01M 50/552;** Y02E 60/10

(86) International application number:
**PCT/CN2022/073867**

(87) International publication number:
**WO 2023/141776 (03.08.2023 Gazette 2023/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Ltd.**
**Ningde, Fujian 352106 (CN)**

(72) Inventor: **JIANG, Jing**
**Ningde, Fujian 352106 (CN)**

(74) Representative: **Klunker IP**
**Patentanwälte PartG mbB**
**Destouchesstraße 68**
**80796 München (DE)**

(54) **BATTERY AND ELECTRONIC DEVICE COMPRISING SAME**

(57)    This application discloses a battery and an electronic device including the battery. The battery includes an electrode assembly, a housing, a plurality of first tabs, and a first conductive plate. The electrode assembly includes a first conductive layer, a second conductive layer, and a first layer arranged between the first conductive layer and the second conductive layer, where the first layer comprises an insulating material. The housing accommodates the electrode assembly. The plurality of first tabs are arranged on one side of the first conductive layer and bent within the housing to form a first tab group. The first conductive plate includes a first segment connected to the first tab group and a second segment connected to the first segment, where the second segment at least partially extends out of the housing and extends in a first direction, and an included angle θ is formed between the first segment and the second segment, the included angle θ is greater than or equal to 60° and less than 90°.

FIG. 2A

## Description

### TECHNICAL FIELD

This application relates to the field of energy storage devices, particularly to a battery and an electronic device including the battery.

### BACKGROUND

To reduce the internal resistance of the battery and improve high-rate charge and discharge performance, multi-tab structures are commonly used in batteries. As the energy density requirements increase, the tabs need to be bent, transitioned, and welded so as to reduce the space occupied by the tabs inside the battery cell. However, when the battery cell is installed into the housing, under the thrust applied by the equipment, the bent tabs are likely to come into contact with the edges of the battery cell or are easily inverted and inserted into the battery cell.

### SUMMARY

An objective of this application is to provide a battery that can reduce the risks of a conductive plate in contact with an edge of an electrode assembly and the conductive plate being inverted and inserted into the electrode assembly.

A first aspect of this application provides a battery including an electrode assembly, a housing, a plurality of first tabs, and a first conductive plate. The electrode assembly includes a first conductive layer, a second conductive layer, and a first layer arranged between the first conductive layer and the second conductive layer, where the first layer contains an insulating material. The housing accommodates the electrode assembly. The plurality of first tabs are arranged on one side of the first conductive layer and bent within the housing to form a first tab group. The first conductive plate includes a first segment connected to the first tab group and a second segment connected to the first segment, where the second segment at least partially extends out of the housing and extends in a first direction, and an included angle θ is formed between the first segment and the second segment, the included angle θ is greater than or equal to 60° and less than 90°.

In this application, the included angle between the first segment and second segment of the first conductive plate is set to be greater than or equal to 60° and less than 90°, which reduces the risk of the first conductive plate in contact with an edge of the electrode assembly or the first conductive plate being inverted and inserted into the electrode assembly when the electrode assembly is installed into the housing.

According to some embodiments of this application, the first conductive layer includes a first metal layer, where in the first direction, the first metal layer includes a first edge and a second edge arranged oppositely, the first edge is arranged closer to the first tab group than the second edge. The first metal layer further includes a first region, where the first edge forms an edge of the first region. The second conductive layer includes a second metal layer, where in the first direction, the second metal layer includes a third edge and a fourth edge arranged oppositely, the third edge is arranged closer to the first tab group than the fourth edge, and the first edge is arranged closer to the first tab group than the third edge. The first segment includes a first surface facing the first conductive layer in the first direction. When viewed from a third direction, a minimum distance between the first edge and the first surface ranges from 0.1 mm to 4 mm. In this way, with an appropriate distance between the first edge and the first surface set, the risk of a short circuit caused by the first tab group squeezing the first edge during manufacturing or use can be reduced, thereby improving safety performance.

According to some embodiments of this application, the first conductive layer is a cathode electrode plate, and a second layer containing an insulating material is provided on the first region. With such second layer arranged, the risk of the first conductive layer and the second conductive layer coming into contact due to burrs generated during cutting of the first metal layer piercing the first layer can be reduced.

According to some embodiments of this application, the first conductive layer is an anode electrode plate.

According to some embodiments of this application, the first tab group includes a first portion, a second portion, and a third portion connected sequentially, where the first portion and the third portion are respectively bent and extend from two ends of the second portion towards the same direction, and the first segment is connected to the third portion. In the first direction, the housing includes a first wall and a second wall arranged oppositely, where the second segment extends from the first wall, and the third portion includes a second surface facing and close to the first wall in the first direction. The second conductive layer includes a second metal layer, where in the first direction, the second metal layer includes a third edge and a fourth edge arranged oppositely, the third edge is arranged close to the first wall, and the fourth edge is arranged close to the second wall. In the first direction, the smaller of a distance between the first edge of the first metal layer and the second surface and a distance between the third edge and the second surface is denoted as B, a distance between an inner surface of the first wall and an inner surface of the second wall is denoted as A, and the largest of a distance between the first edge and the second edge, a distance between the third edge and the fourth edge, a distance between the first edge and the fourth edge, and a distance between the third edge and the second edge is denoted as C. In a second direction, the housing further includes a third wall and a fourth wall arranged oppositely, and in the third direction, the housing includes a fifth wall and a sixth wall arranged oppositely, where the second wall and the third wall are connected through a first cambered surface, and the second wall and the fifth wall are connected through a second cambered surface. A radius of the first cambered surface is $R_1$ a radius of the second cambered surface is $R_2$, and the larger of $R_1$ and $R_2$ is denoted as R. The second segment includes a third surface facing the third wall in the second direction and a fourth surface facing the fourth wall in the second direction, where the larger of a distance between the third surface and the third wall and a distance between the fourth surface and the fourth wall is denoted as D, where $0 < D \times \cot\theta \leq A - B - C - R$.

According to some embodiments of this application, B ranges from 0.1 mm to 5 mm.

According to some embodiments of this application, $D \times \cot\theta$ ranges from greater than 0 mm to less than or equal to 12 mm.

According to some embodiments of this application, in the first direction, the housing includes a first wall and a second wall arranged oppositely, where the second segment extends from the first wall. In the second direction, the first segment includes a first end portion and a second end portion arranged oppositely, where the first end portion is connected to the second segment. In the first direction, a distance between the first end portion and an inner surface of the first wall is greater than a distance between the second end portion and the inner surface of the first wall, so that an included angle formed by intersection of the first segment and the second segment is an acute angle.

According to some embodiments of this application, the housing includes a first wall and a second wall arranged oppositely in the first direction and a third wall and a fourth wall arranged oppositely in the second direction, where the second segment extends from the first wall. The electrode assembly further includes a fifth surface facing the first wall in the first direction, a sixth surface facing the second wall in the first direction, a seventh surface facing the third wall in the second direction, and an eighth surface facing the fourth wall in the second direction. The battery further includes a third layer containing an insulating material, where the third layer is connected to the seventh surface and the eighth surface and partially covers the fifth surface. With the third layer arranged, the electrode assembly is compressed in the second direction, which reduces internal gaps in the electrode assembly, thereby reducing the risk of the first conductive plate being inverted and inserted into the electrode assembly.

According to some embodiments of this application, the first conductive layer, the first layer, and the second conductive layer are stacked and wound to form the electrode assembly, where the electrode assembly includes a plurality of first conductive layers in the second direction, and the plurality of first tabs are connected to at least some of the plurality of first conductive layers.

According to some embodiments of this application, with respect to a center plane of the electrode assembly in the second direction, the plurality of first tabs are located on one or two sides of the center plane in the second direction.

A second aspect of this application further provides a battery including any one of the foregoing electrode assembly and a housing enveloping the electrode assembly, where a first metal plate extends from one end of the housing.

## BRIEF DESCRIPTION OF DRAWINGS

The above and/or additional aspects and advantages of this application will become apparent and easily understood from the description of some embodiments with reference to the following accompanying drawings.

FIG. 1 is a schematic structural diagram of a battery according to an embodiment of this application;

FIG. 2A is a schematic cross-sectional view of the battery shown in FIG. 1 along line II-II;

FIG. 2B is a schematic layout view of two adjacent layers, namely, a first conductive layer and a second conductive layer, of the battery shown in FIG. 2A;

FIG. 3A is a schematic cross-sectional view of a battery according to another embodiment of this application;

FIG. 3B is a schematic layout view of two adjacent layers, namely, a first conductive layer and a second conductive layer, of the battery shown in FIG. 3A;

FIG. 4 is a top view of an electrode assembly of a battery according to an embodiment of this application;

FIG. 5 is a bottom view of the battery shown in FIG. 4;

FIG. 6 is a schematic cross-sectional view of a battery according to another embodiment of this application;

FIG. 7 is a schematic cross-sectional view of a battery according to still another embodiment of this application; and

FIG. 8 is a schematic structural diagram of an electronic device according to an embodiment of this application.

Reference signs of main components:

| | |
|---|---|
| battery | 100 |
| electrode assembly | 10 |

| | |
|---|---|
| housing | 20 |
| first conductive plate | 30 |
| second conductive plate | 40 |
| first conductive layer | 11 |
| second conductive layer | 12 |
| first layer | 13 |
| first metal layer | 111 |
| first conductive material layer | 112 |
| second metal layer | 121 |
| second conductive material layer | 122 |
| first tab | 51 |
| first tab group | 50 |
| first segment | 31 |
| second segment | 32 |
| first edge | 11a |
| second edge | 11b |
| second layer | 60 |
| third surface | 32a |
| fourth surface | 32b |
| first surface | 31a |
| ninth surface | 31b |
| first portion | 501 |
| second portion | 502 |
| third portion | 503 |
| weld mark | 55 |
| first wall | 21 |
| second wall | 22 |
| third wall | 23 |
| fourth wall | 24 |
| fifth wall | 25 |
| sixth wall | 26 |
| first cambered surface | 201 |
| second cambered surface | 202 |
| third cambered surface | 203 |
| second surface | 50a |
| fourth layer | 80a |
| fifth layer | 80b |
| tenth surface | 50b |
| first end portion | 31c |
| second end portion | 31d |
| third layer | 70a |
| fifth surface | 101 |
| sixth surface | 102 |
| seventh surface | 103 |
| eighth surface | 104 |
| center plane | 105 |
| electronic device | 200 |
| main body | 220 |
| third edge | 12a |
| fourth edge | 12b |
| eleventh surface | 50c |
| twelfth surface | 50d |

(continued)

| | |
|---|---|
| sixth layer | 70b |
| seventh layer | 70c |
| eighth layer | 70d |

## DESCRIPTION OF EMBODIMENTS

The following clearly and in detail describes the technical solutions in some embodiments of this application. Apparently, the described embodiments are some rather than all of these embodiments of this application. Unless otherwise defined, all technical and scientific terms used herein shall have the same meanings as commonly understood by persons skilled in the art to which this application belongs. The terms used in the specification of this application are merely intended to describe specific embodiments rather than to limit this application.

The following describes some embodiments of this application in detail. However, this application may be embodied in many different implementations and should not be construed as being limited to the example embodiments set forth herein. Rather, these example embodiments are provided such that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more associated items listed. In addition, it should be understood that when an element A is referred to as being "connected to" an element B, the element A may be directly connected to the element B, or an intervening element C may be present therebetween such that the element A and the element B are indirectly connected to each other.

Further, the use of "may" for describing embodiments of this application relates to "one or more embodiments of this application."

The technical terms used herein are merely intended to describe specific embodiments rather than to limit this application. As used herein, the singular forms are intended to include the plural forms as well, unless otherwise clearly indicated in the context. It should be further understood that the term "including" used in this specification indicates the presence of stated features, numerical values, steps, operations, elements, and/or components but do not preclude the presence or addition of one or more other features, numerical values, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that the spatial related terms are intended to include different directions of a device or an apparatus in use or operation in addition to the directions described in the figures. For example, if the device in the figures is turned over, elements described as "over" or "above" other elements or features would then be oriented "beneath" or "below" the other elements or features. Thus, the example term "above" may include both directions of above and below. It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

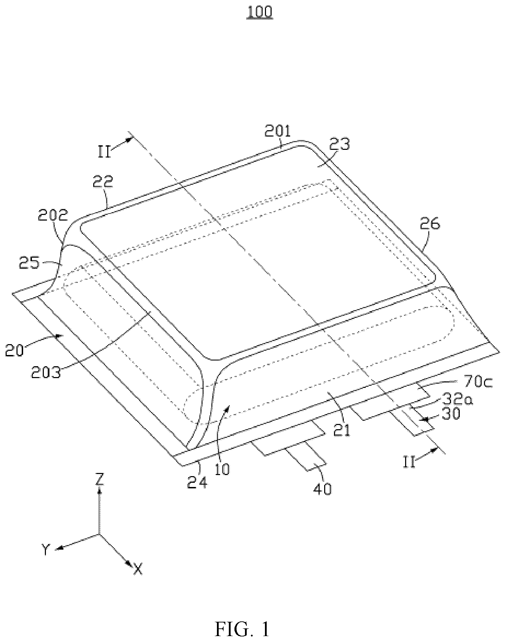

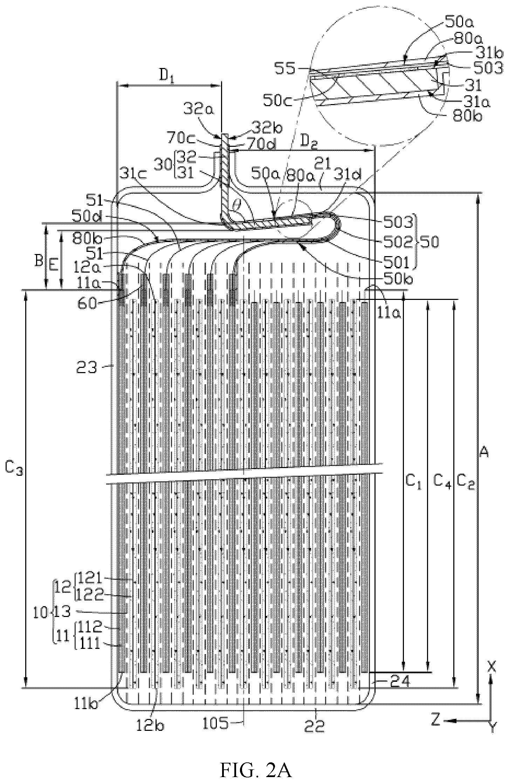

Referring to FIG. 1 and FIG. 2A, an embodiment of this application provides a battery 100 including an electrode assembly 10 and a housing 20 accommodating the electrode assembly 10. A first conductive plate 30 and a second conductive plate 40 are electrically connected to the electrode assembly 10 and separately extend from one side of the housing 20 to connect an external component. In this embodiment, the first conductive plate 30 is a positive electrode, and the second conductive plate 40 is a negative electrode.

Referring to FIG. 2A, the electrode assembly 10 includes a first conductive layer 11, a second conductive layer 12, and a first layer 13 arranged between the first conductive layer 11 and the second conductive layer 12. The electrode assembly 10 may be formed by stacking or winding the first conductive layer 11, the first layer 13, and the second conductive layer 12. In this embodiment, the electrode assembly 10 is formed by stacking and winding the first conductive layer 11, the first layer 13, and the second conductive layer 12.

The first conductive layer 11 includes a first metal layer 111 and a first conductive material layer 112 arranged on the first metal layer 111. The first conductive material layer 112 may be arranged on two opposite surfaces of the first metal layer 111 or on only one surface of the first metal layer 111, which is not limited in this application. In this embodiment, the first conductive layer 11 is a positive electrode. The first metal layer 111 may be a current collector, has a current collecting function, and can include at least one of Ni, Ti, Cu, Ag, Au, Pt, Fe, Al, or a composition thereof. The first conductive material layer 112 has an active layer function, and can include at least one of lithium cobalt oxide, lithium manganese oxide, lithium nickel oxide, lithium nickel cobalt manganese oxide, lithium iron phosphate, lithium iron manganese phosphate, lithium vanadium phosphate, lithium vanadium oxyphosphate, a lithium-rich manganese-based material, lithium nickel cobalt aluminum oxide, or a composition thereof.

The second conductive layer 12 includes a second metal layer 121 and a second conductive material layer 122 arranged on the second metal layer 121. The second conductive material layer 122 may be arranged on two opposite surfaces of the second metal layer 121 or on only one surface, which is not limited in this application. In this embodiment, the second conductive layer 12 is a negative electrode. The second metal layer 121 has a current collecting function and can include at least one of Ni, Ti, Cu, Ag, Au, Pt, Fe, Al, or a composition thereof. The second conductive material layer 122 has an active layer function and can be selected from at least one of a graphite material, an alloy material, lithium metal, or a lithium metal alloy. The graphite material can be selected from at least one of artificial graphite and natural graphite; and the alloy material can be selected from at least one of silicon, silicon oxide, tin, or titanium sulfide.

The first layer 13 is configured to prevent direct contact between the first conductive layer 11 and the second conductive layer 12, thereby reducing the risk of a short circuit caused by contact between the first conductive layer 11 and the second conductive layer 12. The first layer 13 contains an insulating material selected from at least one of polypropylene, polyethylene, polyvinylidene fluoride, vinylidene fluoride-hexafluoropropylene copolymer, polymethyl methacrylate, or polyethylene glycol. The first layer 13 may be a separator.

The battery 100 further includes a plurality of first tabs 51. The plurality of first tabs 51 are arranged on one side of the first conductive layer 11 and bent within the housing 20 to form a first tab group 50, where the first conductive plate 30 is connected to the first tab group 50 and extends out of the housing 20. In this embodiment, the first tab 51 is a positive electrode.

The first conductive plate 30 includes a first segment 31 connected to the first tab group 50 and a second segment 32 connected to the first segment 31. The first segment 31 is accommodated in the housing 20, and at least part of the second segment 32 extends out of the housing 20 and extends in the first direction X. An included angle $\theta$ is formed between the first segment 31 and the second segment 32, where the included angle $\theta$ ranges from greater than or equal to 60° to less than 90°. If the included angle $\theta$ is less than 60°, when the electrode assembly 10 connected to the first conductive plate 30 is pushed into the housing 20 using equipment, the first segment 31 of the first conductive plate 30 is likely to come into contact with an edge of the electrode assembly 10; if the included angle $\theta$ is greater than or equal to 90°, when the electrode assembly 10 connected to the first conductive plate 30 is pushed into the housing 20 using equipment, the first segment 31 of the first conductive plate 30 is likely to be inverted and inserted into the electrode assembly 10.

In the first direction X, the first metal layer 111 includes a first edge 11a and a second edge 11b arranged oppositely. The first edge 11a is arranged close to the first tab group 50. In this embodiment, the first tab 51 is connected to the first edge 11a and extends from the first edge 11a in the first direction X. In other embodiments, the first tab 51 may be welded to a surface of the first metal layer 111 and extend beyond the first edge 11a in the first direction X. In the first direction X, the second metal layer 121 includes a third edge 12a and a fourth edge 12b arranged oppositely. The third edge 12a is arranged close to the first edge 11a, and the fourth edge 12b is arranged close to the second edge 11b.

Referring to FIG. 1 and FIG. 2A, the housing 20 includes a first wall 21 and a second wall 22 arranged oppositely in the first direction X, a third wall 23 and a fourth wall 24 arranged oppositely in the second direction Z, and a fifth wall 25 and a sixth wall 26 arranged oppositely in the third direction Y. The second segment 32 of the first conductive plate 30 extends from the first wall 21. The second wall 22 and the third wall 23 are connected through a first cambered surface 201, the second wall 22 and the fifth wall 25 are connected through a second cambered surface 202, and the third wall 23 and the fifth wall 25 are connected through a third cambered surface 203. A radius of the first cambered surface 201 is $R_1$, a radius of the second cambered surface 202 is $R_2$, and the larger of $R_1$ and $R_2$ is denoted as R. $R_1$ and $R_2$ can be measured with a three-dimensional profile measuring instrument.

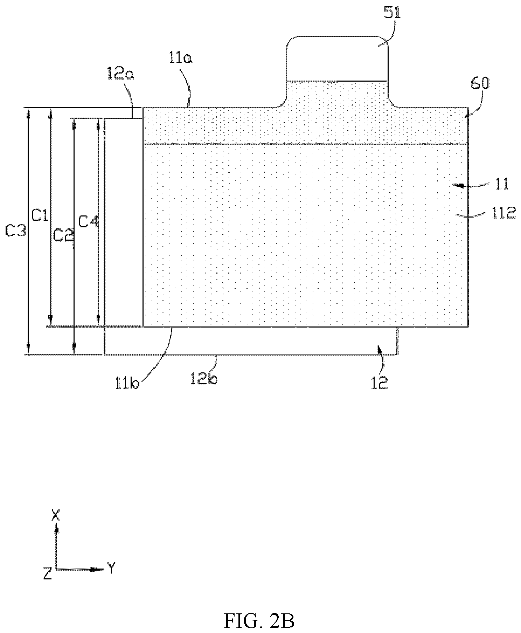

Referring to FIG. 2A and FIG. 2B, FIG. 2B is a top view of two adjacent layers, namely, the first conductive layer 11 and the second conductive layer 12, in the second direction Z in FIG. 2A, with the first layer omitted. The battery 100 further includes a second layer 60 arranged on the first metal layer 111. Specifically, the second layer 60 is arranged on a surface of the first metal layer 111 having the first conductive material layer 112, and extends from the first edge 11a towards the second edge 11b for a predetermined distance in the first direction X and extends away from the second edge 11b to the first tab 51. In the first direction X, an edge of the second layer 60 close to the second edge 11b may be arranged away from the first conductive material layer 112 or may be in contact with the first conductive material layer 112. The second layer 60 includes a ceramic material and a binder. The ceramic material includes at least one of $Al_2O_3$, $TiO_2$, MgO, $SiO_2$, $ZrO_2$, CaO, or boehmite, and the binder may include polyvinylidene fluoride (PVDF). With the second layer 60 arranged, burrs generated at the edge of the first metal layer 111 (that is, the first edge 11a) when the first metal layer 111 is cut to form the first tabs 51 can be reduced; and when the first tabs 51 are bent, the risk of the first conductive layer 11 and the second conductive layer 12 coming into contact due to burrs on the first tabs 51 piercing the first layer 13 can be reduced.

In the first direction X, the first edge 11a of the first conductive layer 11 protrudes beyond the third edge 12a of the second conductive layer 12, and the fourth edge 12b of the second conductive layer 12 protrudes beyond the second edge 11b of the first conductive layer 11. In other words, in the first direction X, the first edge 11a is closer to the first wall 21 than the third edge 12a, and the fourth edge 12b is closer to the second wall 22 than the second edge 11b. In the first direction X, a distance between the first edge 11a and the second edge 11b is denoted as $C_1$, in other words, length of the first conductive layer 11 is $C_1$. In the first direction X, a distance between the third edge 12a and the fourth edge 12b is denoted as $C_2$, in other words, length of the second conductive layer 12 is $C_2$. In the first direction X, a distance between the first edge 11a and the fourth edge 12b is denoted as $C_3$, and a distance between the third edge 12a and the second edge 11b is denoted as $C_4$. The largest of $C_1$, $C_2$, $C_3$, and $C_4$ is C. In this embodiment, $C_4 < C_1 < C_2 < C_3$, in other words, $C_3$ is C.

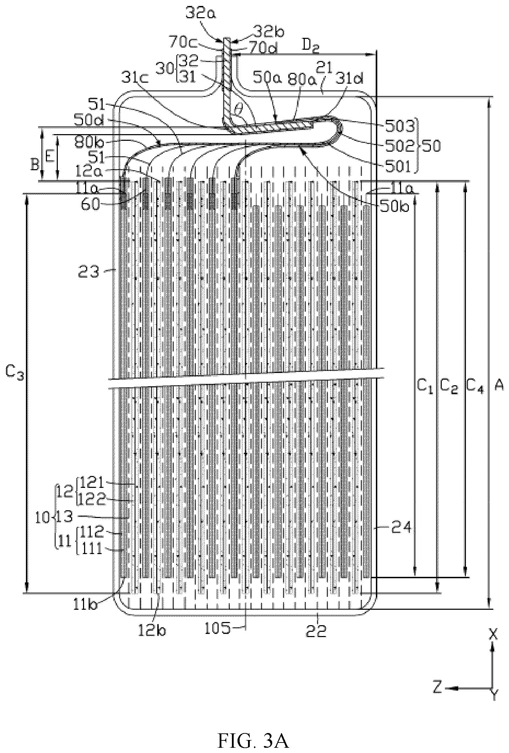

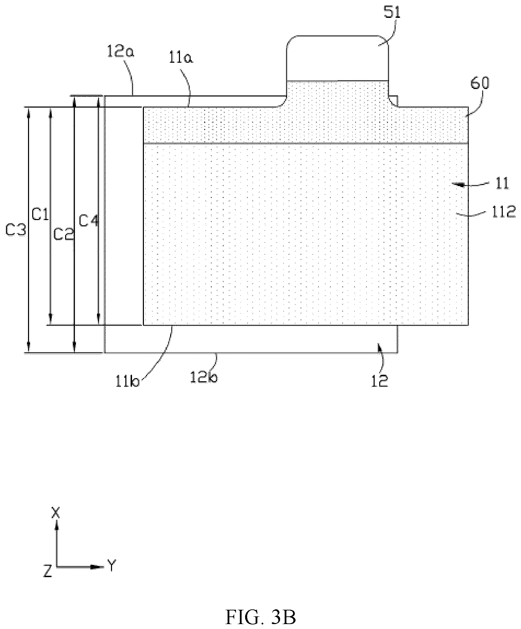

Referring to FIG. 3A and FIG. 3B, in some embodiments, in the first direction X, the third edge 12a of the second conductive layer 12 protrudes beyond the first edge 11a of the first conductive layer 11, and the fourth edge 12b of the second conductive layer 12 protrudes beyond the second edge 1 1b of the first conductive layer 11. In other words, in the first direction X, the third edge 12a is closer to the first wall 21 than the first edge 11a, and the fourth edge 12b is closer to the second wall 22 than the second edge 11b. $C_1$, $C_3$, and $C_4$ are all smaller than $C_2$, in other words, $C_2$ is C.

Referring to FIG. 2A, the second segment 32 includes two surfaces arranged oppositely. In this application, a direction perpendicular to a surface of the second segment 32 and perpendicular to the first direction X is defined as the second direction Z, and a direction perpendicular to both the first direction X and the second direction Z is defined as the third direction Y. In FIG. 2A, two surfaces of the second segment 32 are a third surface 32a and a fourth surface 32b, and the third surface 32a and the fourth surface 32b are arranged oppositely in the second direction Z, extend in the first direction X, and are parallel to each other. In the first direction X, the first segment 31 includes a first surface 31a facing the first conductive layer 11 and a ninth surface 31b facing the housing 20. The first surface 31a is connected to the third surface 32a and is arranged obliquely with respect to the third surface 32a. The ninth surface 31b is connected to the fourth surface 32b and is arranged obliquely with respect to the fourth surface 32b. When viewed from the third direction Y, a minimum distance E between an edge of the first conductive layer 11 and second conductive layer 12 closest to the first wall 21 in the first direction X and the first surface 31a ranges from 0.1 mm to 4 mm, so as to reduce the risk of the first tab group 50 pressing the edge of the first conductive layer 11 or second conductive layer 12. When the first edge 11a protrudes beyond the third edge 12a in the first direction X, the first edge 11a is an edge of the first conductive layer 11 and second conductive layer 12 closest to the first wall 21 in the first direction X, and when viewed from the third direction Y, the minimum distance E between the first edge 11a and the first surface 31a ranges from 0.1 mm to 4 mm. When the third edge 12a protrudes beyond the first edge 11a in the first direction X, the third edge 12a is an edge of the first conductive layer 11 and second conductive layer 12 closest to the first wall 21 in the first direction X, and when viewed from the third direction Y, the minimum distance E between the third edge 12a and the first surface 31a ranges from 0.1 mm to 4 mm. In this embodiment, a distance between a connection line of the first surface 31a and the third surface 32a and the corresponding first edge 11a or third edge 12a in the first direction X is the minimum distance E.

The first tab group 50 includes a first portion 501, a second portion 502, and a third portion 503 connected sequentially. The first portion 501 and the third portion 503 are separately bent and extend from two ends of the second portion 502 towards the same direction. In other embodiments, the first portion 501 and the third portion 503 may be separately bent and extend from two ends of the second portion 502 towards different directions. The first portion 501 is connected to the first metal layer 111, and the third portion 503 is connected to the first segment 31. In this embodiment, the first portion 501, the second portion 502, and the third portion 503 each include a plurality of layers of first tabs 51 stacked, and the plurality of layers of first tabs 51 in the first portion 501, the plurality of layers of first tabs 51 in the second portion 502, and the plurality of layers of first tabs 51 in the third portion 503 are connected sequentially. In some embodiments, the third portion 503 is welded to the ninth surface 31b of the first segment 31. A weld mark 55 is formed between the third portion 503 and the ninth surface 31b. In some embodiments, the first portion 501 is composed of a straight section formed by the plurality of layers of first tabs 51 extending from the first edge 11a after the first bending, the second portion 502 is composed of a bending section formed by the plurality of layers of first tabs 51 extending from the first edge 11a after the second bending, and the third portion 503 is composed of a straight section formed by the plurality of layers of first tabs 51 extending from the first edge 11a after the second bending. It can be understood that when the first tabs 51 are bent only once in the housing 20, the first tabs 51 do not include a portion located in the first portion 501.

The third portion 503 includes a second surface 50a facing and close to the first wall 21 in the first direction X and an eleventh surface 50b arranged oppositely to the second surface 50a in the first direction X. In this embodiment, the second surface 50a is a surface close to the first wall 21, of the layer of the first tab 51 closest to the first wall 21 in the plurality of layers of first tabs 51 in the third portion 503, and the eleventh surface 50b is a surface close to the first segment 31, of the layer of the first tab 51 closest to the first segment 31 in the plurality of layers of first tabs 51 in the third portion 503. The weld mark 55 is formed between the ninth surface 31b and the eleventh surface 50b. When viewed from the third direction Y, a distance between an edge of the first conductive layer 11 and second conductive layer 12 closest to the first wall 21 in the first direction X and the second surface is B. When the first edge 11a protrudes beyond the third edge 12a in the first direction X, the first edge 11a is an edge of the first conductive layer 11 and second conductive layer 12 closest to the first wall 21 in the first direction X, and a distance between the first edge 11a and the second surface 50a in the first direction X is B. When the third edge 12a protrudes beyond the first edge 11a in the first direction X, the third edge 12a is an edge of the first conductive layer 11 and second conductive layer 12 closest to the first wall 21 in the first direction X, and a distance between the third edge 12a and the second surface 50a in the first direction X is B. In FIG. 2A, the second surface 50a is arranged obliquely with respect to the second segment 32, and a distance between an end portion of the second surface 50a close to the second segment 32 and the first edge 11a in the first direction X is distance B. In FIG. 3A, the second surface 50a is arranged obliquely with respect to the second segment 32, and a distance between an end portion of the second surface 50a close to the second segment 32 and the third edge 12a in the first direction X is distance B. In the first direction X, a distance between an inner surface of the first wall 21 and an inner surface of the second wall 22 is A. In the second direction Z, a distance between the third surface 32a and the third wall 23 is $D_1$, a distance between the fourth surface 32b and the fourth wall 24 is $D_2$, and the larger of $D_1$ and $D_2$ is D, where $0 < D \times \cot\theta \leq A - B - C - R$.

In some embodiments, the minimum distance B ranges from 0.1 mm to 5 mm, and $D \times \cot\theta$ ranges from greater than 0 mm to less than or equal to 12 mm.

In some embodiments, it is assumed that the first portion 501 and third portion 503 of the first tab group 50 each include N layers of first tabs 51. In the first direction X, thickness of the first tab 51 is $B_1$, thickness of the weld mark 55 is $B_2$, and thickness of the first segment 31 of the first conductive plate 30 is $B_3$, where $B = 2N \times B_1 \times (0.5 \text{ to } 2) + B_2 + B_3$.

In some embodiments, the battery 100 further includes a fourth layer 80a and a fifth layer 80b. The first portion 501 includes a tenth surface 50b facing and close to the first conductive layer 11 in the first direction X and a twelfth surface 50d facing and close to the first wall 21 in the first direction X. In this embodiment, the tenth surface 50b is a surface close to the first conductive layer 11, of the layer of the first tab 51 closest to the first conductive layer 11 in the plurality of layers of first tabs 51 in the first portion 501, and the twelfth surface 50d is a surface close to the first wall 21, of the layer of the first tab 51 closest to the first wall 21 in the plurality of layers of first tabs 51 in the first portion 501. The fourth layer 80a is arranged on the tenth surface 50b, with one end extending along the corresponding first tab 51 to a surface of the corresponding first conductive layer 11, and another end extending along the corresponding first tabs 51 in the second portion 502 and the third portion 503 to the fourth surface 32b of the second segment 32. The fourth layer 80a covers a region on the second surface 50a corresponding to a position of the weld mark 55. The fifth layer 80b is arranged on the twelfth surface 50d, with one end extending along the corresponding first tab 51 to a surface of the corresponding first conductive layer 11, and another end extending along the corresponding first tabs 51 in the second portion 502 and the third portion 503 to the third surface 32a of the second segment 32. The fifth layer 80b covers a region on the first surface 31a corresponding to a position of the weld mark 55. The fourth layer 80a and the fifth layer 80b wrap the first tab group 50, which reduces the risk of corrosion of the first tab group 50 by the electrolyte. The fourth layer 80a and the fifth layer 80b each contain an insulating material, where the insulating material may be selected from at least one of polyethylene, polypropylene, phenolic resin, melamine resin, unsaturated polyester resin, epoxy resin, silicone resin, or polyurethane.

In some embodiments, in the second direction Z, the first segment 31 includes a first end portion 31c and a second end portion 31d arranged oppositely. The first end portion 31c is connected to the second segment 32. In the first direction X, a distance between the first end portion 31c and the inner surface of the first wall 21 is greater than a distance between the second end portion 31d and the inner surface of the first wall 21, so that an included angle θ formed by the intersection of the first segment 31 and the second segment 32 is an acute angle.

It can be understood that the battery 100 further includes a plurality of second tabs (not shown in the figure), where the plurality of second tabs are arranged on one side of the second conductive layer 12 and bent within the housing 20 to form a second tab group (not shown in the figure), and the second conductive plate 40 is connected to the second tab group and extends out of the housing 20. The second tab may be a negative electrode. The structure of the second tab may be the same as that of the first tab 51, the structure of the second tab group may be the same as that of the first tab group 50, and the structure of the second conductive plate 40 may be the same as that of the first conductive plate 30, which are not repeated in this application.

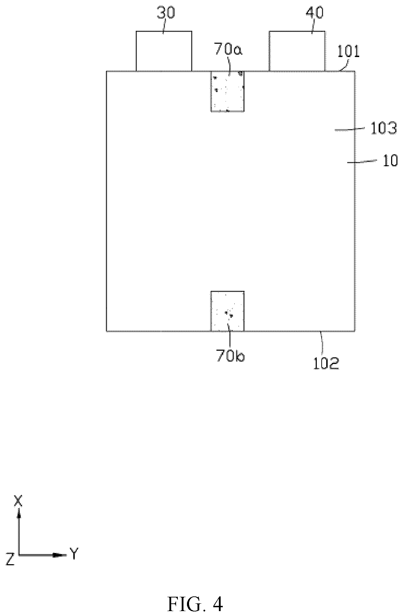

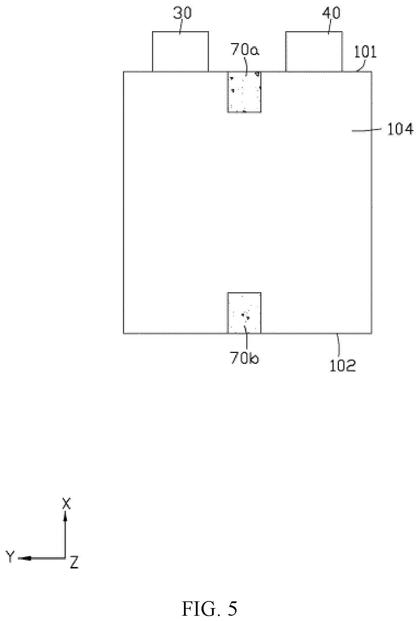

Referring to FIG. 4 and FIG. 5, in some embodiments, the battery 100 further includes a third layer 70a and a sixth layer 70b. The electrode assembly 10 further includes a fifth surface 101 facing the first wall 21 in the first direction X, a sixth surface 102 facing the second wall 22 in the first direction X, a seventh surface 103 facing the third wall 23 in the second direction Z, and an eighth surface 104 facing the fourth wall 24 in the second direction Z. The third layer 70a is connected to the seventh surface 103 and the eighth surface 104 and partially covers the fifth surface 101, and the sixth layer 70b is connected to the seventh surface 103 and the eighth surface 104 and partially covers the sixth surface 102. The third layer 70a partially covering the fifth surface 101 is located between the first conductive plate 30 and the second conductive plate 40. The third layer 70a and the sixth layer 70b each may contain an insulating material, where the insulating material may be selected from at least one of polyethylene, polypropylene, phenolic resin, melamine resin, unsaturated polyester resin, epoxy resin, silicone resin, or polyurethane. With the third layer 70a and the sixth layer 70b arranged, the electrode assembly 10 is compressed in the second direction Z, which reduces internal gaps in the electrode assembly 10, thereby reducing the risk of the first conductive plate 30 being inverted and inserted into the electrode assembly 10.

Referring to FIG. 1 and FIG. 2A, in some embodiments, the battery 100 further includes a seventh layer 70c and an eighth layer 70d. The seventh layer 70c is sandwiched between the third surface 32a of the second segment 32 and the first wall 21, so that the third surface 32a and the first wall 21 are hermetically connected. In the first direction X, two ends of the seventh layer 70c can extend in a direction away from the first wall 21, so that the seventh layer 70c has a portion exposed outside the housing 20 and a portion exposed inside the housing 20. The eighth layer 70d is sandwiched between the fourth surface 32b of the second segment 32 and the first wall 21, so that the fourth surface 32b and the first wall 21 are hermetically connected. In the first direction X, two ends of the eighth layer 70d can extend in a direction away from the first wall 21, so that the eighth layer 70d has a portion exposed outside the housing 20 and a portion exposed inside the housing 20. The seventh layer 70c and the eighth layer 70d each may contain an insulating material, where the insulating material may be selected from at least one of polyethylene, polypropylene, phenolic resin, melamine resin, unsaturated polyester resin, epoxy resin, silicone resin, or polyurethane.

Referring to FIG. 2A, in the second direction Z, the electrode assembly 10 includes a plurality of layers of the first conductive layers 11. The plurality of first tabs 51 are connected to at least some of the plurality of layers of the first conductive layers 11. In this embodiment, the plurality of first tabs 51 are located on one side of a center plane 105 close to the third wall 23 in the second direction Z, and are connected to the plurality of layers of the first conductive layers 11 on the side of the center plane 105 close to the third wall 23. In this application, the center plane 105 is a central plane in the electrode assembly 10 that is parallel to both the first direction X and the third direction Y, and is a non-physical structure. In other embodiments, in the second direction Z, the plurality of first tabs 51 may be located on a side of the center plane 105 close to the fourth wall 24. The plurality of first tabs 51 arranged on one side of the center plane 105 in the second direction Z can reduce the risk of tab misalignment.

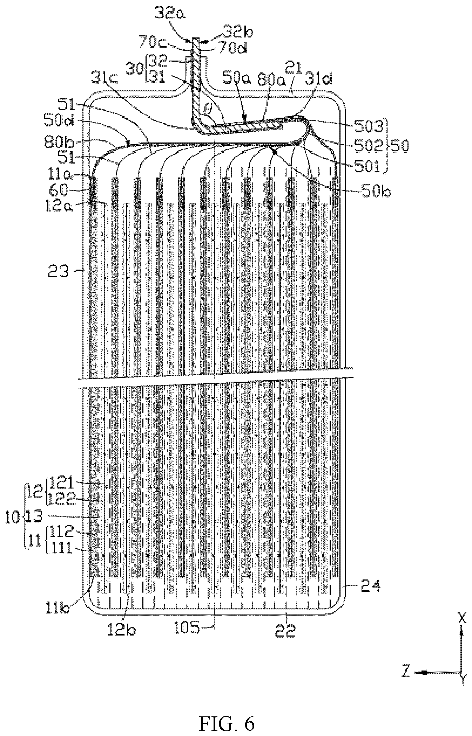

Referring to FIG. 6, in some embodiments, in the second direction Z, the plurality of first tabs 51 are located on two sides of the center plane 105 and are respectively connected to the plurality of layers of the first conductive layers 11. Compared with the plurality of first tabs 51 located on only one side of the center plane 105 in the second direction Z, the plurality of first tabs 51 distributed on two sides of the center plane 105 in the second direction Z form constraints on each other, which can reduce the risk of the first conductive plate 30 being inverted and inserted into the electrode assembly 10.

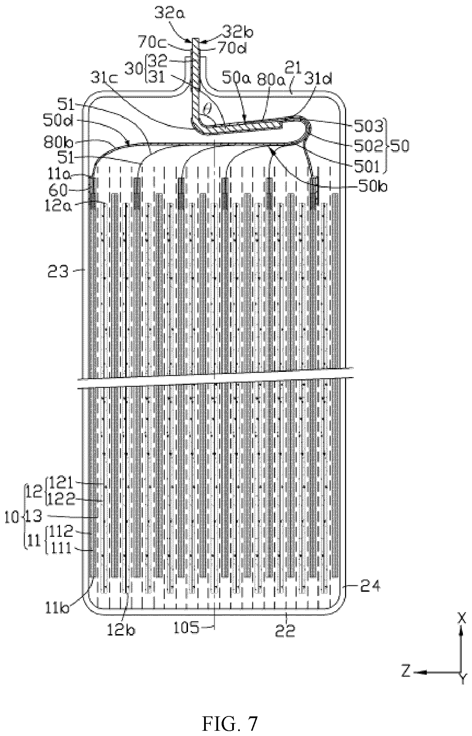

Referring to FIG. 7, in some embodiments, in the second direction Z, the plurality of first tabs 51 are located on two sides of the center plane 105. Some of the first tabs 51 are connected to some of the plurality layers of the first conductive layer 11 on a side of the center plane 105 close to the third wall 23, and the other portion of the first tabs 51 are connected to some of the plurality of layers of the first conductive layer 11 on a side of the center plane 105 close to the fourth wall 24.

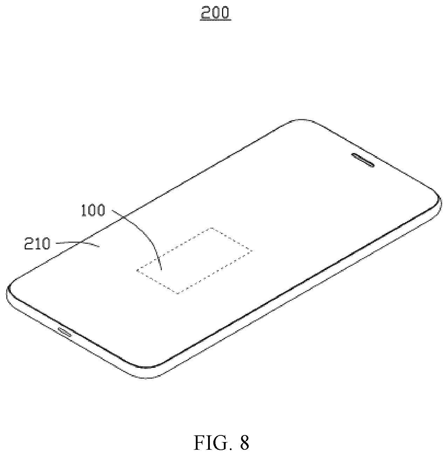

Referring to FIG. 8, an embodiment of this application further provides an electronic device 200, where the electronic device 200 includes a main body 220 and a battery 100. The battery 100 is accommodated in the main body 220. The electronic device 200 may be one of a mobile phone, a tablet, or an e-reader.

In this application, the electronic device 200 being a mobile phone is used as an example. The battery 100 is arranged in the mobile phone to provide power for the mobile phone, and the main body 220 is a mobile phone structure. It can be understood that in other embodiments, the electronic device 200 may alternatively be other structures, not limited to the above-mentioned mobile phone, tablet, or e-reader.

In this application, the included angle between the first segment and second segment of the first conductive plate is set to be greater than or equal to 60° and less than 90°, which reduces the risk of the first conductive plate in contact with an edge of the electrode assembly or the first conductive plate being inverted and inserted into the electrode assembly when the electrode assembly is installed into the housing.

The following describes the performance of the battery provided by this application through specific examples and comparative examples.

Example 1

The electrode assembly 10 shown in FIG. 2A was used. After the electrode assembly 10 was loaded into the housing 20 for liquid injection, packaging, and formation, a finished battery was prepared. The included angle θ between the first segment 31 and the second segment 32 was 60°, and the minimum distance E was 1.5 mm.

Example 2

A finished battery substantially the same as that in Example 1 was prepared, except that the included angle θ between the first segment 31 and the second segment 32 was 70°.

Example 3

A finished battery substantially the same as that in Example 1 was prepared, except that the included angle θ between the first segment 31 and the second segment 32 was 80°.

Comparative Example 1

A finished battery substantially the same as that in Example 1 was prepared, except that the included angle θ between the first segment 31 and the second segment 32 was 50° and the minimum distance E was 0.05 mm.

Comparative Example 2

A finished battery substantially the same as that in Example 1 was prepared, except that the included angle θ between the first segment 31 and the second segment 32 was 90°.

Comparative Example 3

A finished battery substantially the same as that in Example 1 was prepared, except that the included angle θ between the first segment 31 and the second segment 32 was 95°.

10 finished batteries were taken from each of Examples 1 to 3 and Comparative Examples 1 to 3. The short circuit situation caused by the first conductive plate inverted and inserted into the electrode assembly was observed, the short circuit situation caused by the first conductive plate in contact with the first edge of the first conductive layer was observed, the energy densities of the finished batteries were measured, and the yield rate of the seventh layer or the eighth layer exposed inside or outside the housing was calculated. Test results are shown in Table 1.

**Table 1**

|  | Included angle θ (°) | Minimum distance E (mm) | Proportion of short circuits caused by first conductive plate inverted and inserted into electrode assembly | Proportion of short circuits caused by first conductive plate in contact with first edge | Energy density (Wh/L) | Yield rate of seventh layer or eighth layer exposed inside or outside housing |
|---|---|---|---|---|---|---|
| Example 1 | 60 | 1.5 | 0% | 0% | 340 | 0% |
| Example 2 | 70 | 1.5 | 0% | 0% | 340 | 0% |
| Example 3 | 80 | 1.5 | 0% | 0% | 340 | 0% |
| Comparative Example 1 | 50 | 0.05 | 15% | 20% | 346 | 8% |
| Comparative Example 2 | 90 | 1.5 | 3% | 0% | 340 | 2% |
| Comparative Example 3 | 95 | 1.5 | 18% | 0% | 340 | 4% |

As can be seen from Table 1, when the included angle θ is greater than or equal to 60° and less than 90°, the risk of short circuit caused by the first conductive plate in contact with the first edge and the risk of short circuit caused by the first conductive plate inverted and inserted into the electrode assembly can be reduced.

Example 4

The electrode assembly 10 shown in FIG. 2A was used. After the electrode assembly 10 was loaded into the housing 20 for liquid injection, packaging, and formation, a finished battery was prepared. The included angle θ between the first segment 31 and the second segment 32 was 70°, and the minimum distance E was 0.05 mm.

Example 5

A finished battery substantially the same as that in Example 4 was prepared, except that the minimum distance E was 0.1 mm.

Example 6

A finished battery substantially the same as that in Example 4 was prepared, except that the minimum distance E was 0.5 mm.

Example 7

A finished battery substantially the same as that in Example 4 was prepared, except that the minimum distance E was 1 mm.

Example 8

A finished battery substantially the same as that in Example 4 was prepared, except that the minimum distance E was 2.5 mm.

Example 9

A finished battery substantially the same as that in Example 4 was prepared, except that the minimum distance E was 3 mm.

Example 10

A finished battery substantially the same as that in Example 4 was prepared, except that the minimum distance E was 3.5 mm.

Example 11

A finished battery substantially the same as that in Example 4 was prepared, except that the minimum distance E was 4 mm.

Example 12

A finished battery substantially the same as that in Example 4 was prepared, except that the minimum distance E was 4.5 mm.

10 finished batteries were taken from each of Examples 4 to 12. The short circuit situation caused by the first conductive plate inverted and inserted into the electrode assembly was observed, the short circuit situation caused by the first conductive plate in contact with the first edge of the first conductive layer was observed, the energy densities of the finished batteries were measured, and statistics were performed on the yield rate of the seventh layer or the eighth layer exposed inside or outside the housing. Test results are shown in Table 2.

**Table 2**

| | Included angle θ (°) | Minimum distance E (mm) | Proportion of short circuits caused by first conductive plate inverted and inserted into electrode assembly | Proportion of short circuits caused by first conductive plate in contact with first edge | Energy density (Wh/L) | Yield rate of seventh layer or eighth layer exposed inside or outside housing |
|---|---|---|---|---|---|---|
| Example 4 | 70 | 0.05 | 2% | 10% | 346 | 5% |
| Example 5 | 70 | 0.1 | 0% | 0% | 346 | 0.5% |
| Example 6 | 70 | 0.5 | 0% | 0% | 344 | 0% |
| Example 7 | 70 | 1 | 0% | 0% | 342 | 0% |

(continued)

| | Included angle θ (°) | Minimum distance E (mm) | Proportion of short circuits caused by first conductive plate inverted and inserted into electrode assembly | Proportion of short circuits caused by first conductive plate in contact with first edge | Energy density (Wh/L) | Yield rate of seventh layer or eighth layer exposed inside or outside housing |
|---|---|---|---|---|---|---|
| Example 8 | 70 | 2.5 | 0% | 0% | 336 | 0% |
| Example 9 | 70 | 3 | 0% | 0% | 334 | 0% |
| Example 10 | 70 | 3.5 | 0% | 0% | 332 | 0% |
| Example 11 | 70 | 4 | 0% | 0% | 330 | 0.0% |
| Example 12 | 70 | 4.5 | 0% | 0% | 328 | 6% |

As can be seen from Table 2, when the minimum distance E satisfies $0.1 \, mm \leq E \leq 4 \, mm$, the risk of short circuit caused by the first conductive plate in contact with the first edge and the risk of short circuit caused by the first conductive plate inverted and inserted into the electrode assembly can be reduced.

Example 13

The electrode assembly 10 shown in FIG. 2A was used. After the electrode assembly 10 was loaded into the housing 20 for liquid injection, packaging, and formation, a finished battery was prepared. The included angle θ between the first segment 31 and the second segment 32 was 70°, C was 128.7 mm, R was 2.3 mm, the minimum distance B was 3 mm, the distance between the inner surface of the first wall 21 and the inner surface of the second wall 22 was 135 mm, and the larger of the distance between the third surface 32a and the third wall 23 and the distance between the fourth surface 32b and the fourth wall 24 was 4.5 mm.

Example 14

A finished battery substantially the same as that in Example 13 was prepared, except that R was 0.5 mm and the minimum distance B was 1 mm.

Example 15

A finished battery substantially the same as that in Example 13 was prepared, except that R was 0.5 mm, the minimum distance B was 1 mm, and the larger of the distance between the third surface 32a and the third wall 23 and the distance between the fourth surface 32b and the fourth wall 24 was 7.5 mm.

Example 16

A finished battery substantially the same as that in Example 13 was prepared, except that C was 132.7 mm, R was 0.5 mm, and the minimum distance B was 1 mm.

Example 17

A finished battery substantially the same as that in Example 13 was prepared, except that R was 0.5 mm, the minimum distance B was 1 mm, and the distance between the inner surface of the first wall 21 and the inner surface of the second wall 22 was 130 mm.

Example 18

A finished battery substantially the same as that in Example 13 was prepared, except that R was 0.5 mm, the minimum distance B was 1 mm, and the distance between the inner surface of the first wall 21 and the inner surface of the second wall 22 was 137 mm.

10 finished batteries were taken from each of Examples 13 to 18. The short circuit situation caused by the first conductive plate inverted and inserted into the electrode assembly was observed, the short circuit situation caused by the first conductive plate in contact with the first edge of the first conductive layer was observed, the energy densities of the finished batteries were measured, and statistics were performed on the yield rate of the seventh layer or the eighth layer exposed inside or outside the housing. Test results are shown in Table 3.

**Table 3**

| | Included angle θ (°) | C (mm) | R (mm) | B (mm) | A (mm) | D (mm) | Proportion of short circuits caused by first conductive plate inserted backward into electrode assembly | Proportion of short circuits caused by first conductive plate in contact with first edge | Energy density (Wh/L) | Yield rate of seventh layer or eighth layer exposed inside or outside housing |
|---|---|---|---|---|---|---|---|---|---|---|
| Example 13 | 70 | 128.7 | 2.3 | 3 | 135 | 4.5 | 7% | 5% | 340 | 6% |
| Example 14 | 70 | 128.7 | 0.5 | 1 | 135 | 4.5 | 0% | 0% | 335 | 0% |
| Example 15 | 70 | 128.7 | 0.5 | 1 | 135 | 7.5 | 0% | 0% | 338 | 0% |
| Example 16 | 70 | 132.7 | 0.5 | 1 | 135 | 4.5 | 8% | 8% | 345 | 8% |
| Example 17 | 70 | 128.7 | 1.5 | 1.1 | 130 | 4.5 | 13% | 8% | 351 | 16% |
| Example 18 | 70 | 128.7 | 0.8 | 2.1 | 137 | 4.5 | 0% | 0% | 330 | 10% |

As can be seen from the test results in Table 3, when $0 < D \times \cot\theta \leq A - B - C - R$ is satisfied, the risk of short circuit caused by the first conductive plate in contact with the first edge and the risk of short circuit caused by the first conductive plate inverted and inserted into the electrode assembly can be reduced.

The descriptions disclosed above are only the preferred embodiments of this application, and do not, certainly, constitute limitation to this application. Accordingly, any equivalent changes made in accordance with this application still fall within the scope of this application.

**Claims**

1. A battery, comprising:

an electrode assembly, comprising a first conductive layer, a second conductive layer, and a first layer arranged between the first conductive layer and the second conductive layer, wherein the first layer comprises an insulating material;
a housing, accommodating the electrode assembly;
a plurality of first tabs, arranged on one side of the first conductive layer and bent within the housing to form a first tab group; and

a first conductive plate, comprising a first segment connected to the first tab group and a second segment connected to the first segment, wherein the second segment at least partially extends out of the housing and extends in a first direction, and an included angle θ is formed between the first segment and the second segment, the included angle θ is greater than or equal to 60° and less than 90°.

2. The battery according to claim 1, wherein the first conductive layer comprises a first metal layer, wherein in the first direction, the first metal layer comprises a first edge and a second edge arranged oppositely, the first edge is arranged closer to the first tab group than the second edge, and the first metal layer further comprises a first region, the first edge forms an edge of the first region;

the second conductive layer comprises a second metal layer, wherein in the first direction, the second metal layer comprises a third edge and a fourth edge arranged oppositely, the third edge is arranged closer to the first tab group than the fourth edge, and the first edge is arranged closer to the first tab group than the third edge;
the first segment comprises a first surface facing the first conductive layer in the first direction; and
a direction perpendicular to a surface of the second segment and perpendicular to the first direction is defined as a second direction, and a direction perpendicular to both the first direction and the second direction is defined as a third direction, wherein when viewed from the third direction, a minimum distance between the first edge and the first surface ranges from 0.1 mm to 4 mm.

3. The battery according to claim 2, wherein the first conductive layer is a cathode electrode plate, and a second layer containing an insulating material is provided on the first region.

4. The battery according to claim 2, wherein the first conductive layer is an anode electrode plate.

5. The battery according to claim 1, wherein the first tab group comprises a first portion, a second portion, and a third portion connected sequentially, wherein the first portion and the third portion are respectively bent and extend from two ends of the second portion towards the same direction, and the first segment is connected to the third portion;

in the first direction, the housing comprises a first wall and a second wall arranged oppositely, wherein the second segment extends from the first wall, and the third portion comprises a second surface facing and close to the first wall in the first direction;
the first conductive layer comprises a first metal layer, wherein in the first direction, the first metal layer comprises a first edge and a second edge arranged oppositely, the first edge is arranged close to the first wall, and the second edge is arranged close to the second wall;
the second conductive layer comprises a second metal layer, wherein in the first direction, the second metal layer comprises a third edge and a fourth edge arranged oppositely, the third edge is arranged close to the first wall, and the fourth edge is arranged close to the second wall;
in the first direction, the smaller of a distance between the first edge and the second surface and a distance between the third edge and the second surface is defined as B, a distance between an inner surface of the first wall and an inner surface of the second wall is defined as A, and the largest of a distance between the first edge and the second edge, a distance between the third edge and the fourth edge, a distance between the first edge and the fourth edge, and a distance between the third edge and the second edge is defined as C;
a direction perpendicular to a surface of the second segment and perpendicular to the first direction is defined as a second direction, and a direction perpendicular to both the first direction and the second direction is defined as a third direction, wherein in the second direction, the housing further comprises a third wall and a fourth wall arranged oppositely, and in the third direction, the housing comprises a fifth wall and a sixth wall arranged oppositely, wherein the second wall and the third wall are connected through a first cambered surface, the second wall and the fifth wall are connected through a second cambered surface, a radius of the first cambered surface is $R_1$, a radius of the second cambered surface is $R_2$, and the larger of $R_1$ and $R_2$ is denoted as R; and
the second segment comprises a third surface facing the third wall in the second direction and a fourth surface facing the fourth wall in the second direction, wherein the larger of a distance between the third surface and the third wall and a distance between the fourth surface and the fourth wall is defined as D;
wherein

$$0 < D \times \cot\theta \leq A - B - C - R$$

6. The battery according to claim 5, wherein B ranges from 0.1 mm to 5 mm.

7. The battery according to claim 5, wherein $D \times \cot\theta$ ranges from greater than 0 mm to less than or equal to 12 mm.

8. The battery according to claim 1, wherein in the first direction, the housing comprises a first wall and a second wall arranged oppositely, and the second segment extends from the first wall;

a direction perpendicular to a surface of the second segment and perpendicular to the first direction is defined as a second direction, wherein in the second direction, the first segment comprises a first end portion and a second end portion arranged oppositely, wherein the first end portion is connected to the second segment; and
in the first direction, a distance between the first end portion and an inner surface of the first wall is greater than a distance between the second end portion and the inner surface of the first wall.

9. The battery according to claim 1, wherein a direction perpendicular to a surface of the second segment and perpendicular to the first direction is defined as a second direction, and the housing comprises a first wall and a second wall arranged oppositely in the first direction and a third wall and a fourth wall arranged oppositely in the second direction, wherein the second segment extends from the first wall;

the electrode assembly further comprises a fifth surface facing the first wall in the first direction, a sixth surface facing the second wall in the first direction, a seventh surface facing the third wall in the second direction, and an eighth surface facing the fourth wall in the second direction; and
the battery further comprises a third layer containing an insulating material, wherein the third layer is connected to the seventh surface and the eighth surface and partially covers the fifth surface.

10. The battery according to claim 1, wherein the first conductive layer, the first layer, and the second conductive layer are stacked and wound to form the electrode assembly, a direction perpendicular to a surface of the second segment and perpendicular to the first direction is defined as a second direction, the electrode assembly comprises a plurality of first conductive layers in the second direction, and the plurality of first tabs are connected to at least some of the plurality of first conductive layers.

11. The battery according to claim 10, wherein with respect to a center plane of the electrode assembly in the second direction, the plurality of first tabs are located on one or two sides of the center plane in the second direction.

12. An electronic device, comprising the battery according to any one of claims 1 to 11.

FIG. 1

FIG. 2A

FIG. 2B

FIG. 3A

FIG. 3B

FIG. 4

FIG. 5

FIG. 6

EP 4 471 947 A1

FIG. 7

24

200

FIG. 8

## INTERNATIONAL SEARCH REPORT

International application No.

**PCT/CN2022/073867**

### A. CLASSIFICATION OF SUBJECT MATTER

H01M 50/172(2021.01)i; H01M 50/533(2021.01)i; H01M 50/552(2021.01)i; H01M 50/547(2021.01)i; H01M 10/0525(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 电池, 电芯, 接片, 极柱, 端子, 引线, 导电板, 导电片, 集流板, 集流片, 集电板, 集电片, 连接片, 转接?, 弯, 折, 夹角, 锐角, battery, lead, tab, conduct+, connect+, pole, bend, curve, wound, angle

### C. DOCUMENTS CONSIDERED TO BE RELEVANT

| Category* | Citation of document, with indication, where appropriate, of the relevant passages | Relevant to claim No. |
|---|---|---|
| A | CN 111755657 A (NINGDE AMPEREX TECHNOLOGY LTD.) 09 October 2020 (2020-10-09) description, paragraphs [0028]-[0056], and figure 1 | 1-12 |
| A | CN 113437444 A (POWERAMP TECHNOLOGY LIMITED) 24 September 2021 (2021-09-24) entire document | 1-12 |
| A | CN 113270671 A (NINGDE AMPEREX TECHNOLOGY LTD.) 17 August 2021 (2021-08-17) entire document | 1-12 |
| A | DE 102021006016 A1 (DAIMLER AG.) 20 January 2022 (2022-01-20) entire document | 1-12 |
| A | JP 2004220816 A (SONY CORP.) 05 August 2004 (2004-08-05) entire document | 1-12 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 October 2022** | **21 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/073867**

| Patent document cited in search report | | | Publication date (day/month/year) | Patent family member(s) | | | Publication date (day/month/year) |
|---|---|---|---|---|---|---|---|
| CN | 111755657 | A | 09 October 2020 | US | 2020313145 | A1 | 01 October 2020 |
| | | | | CN | 111755657 | B | 15 February 2022 |
| CN | 113437444 | A | 24 September 2021 | None | | | |
| CN | 113270671 | A | 17 August 2021 | None | | | |
| DE | 102021006016 | A1 | 20 January 2022 | None | | | |
| JP | 2004220816 | A | 05 August 2004 | None | | | |

Form PCT/ISA/210 (patent family annex) (January 2015)